# EUROPÄISCHE PATENTSCHRIFT

(11) **EP 2 622 247 B1**
(45) Veröffentlichungstag und Bekanntmachung des Hinweises auf die Patenterteilung: **28.03.2018**
(21) Anmeldenummer: 11767888.8
(22) Anmeldetag: 27.09.2011
(51) Int. Cl.: F02M 63/00, F02M 63/02, F16K 17/04, F16K 31/122

(54) **VENTIL MIT DRUCKBEGRENZUNGSFUNKTION**
VALVE HAVING A PRESSURE LIMITING FUNCTION
SOUPAPE COMPORTANT UNE FONCTION DE LIMITATION DE LA PRESSION

(30) Priorität: 27.09.2010 AT 16122010
(43) Veröffentlichungstag der Anmeldung: 07.08.2013
(73) Patentinhaber: Robert Bosch GmbH, 70469 Stuttgart-Feuerbach (DE)
(72) Erfinder: GRASPEUNTNER, Christian, A-5400 Hallein (AT)
(86) Internationale Anmeldenummer: PCT/AT2011/000395
(87) Internationale Veröffentlichungsnummer: WO 2012/040756

(56) Entgegenhaltungen:
- WO-A1-03/031852
- WO-A1-2004/083695
- AT-U1- 11 266
- DE-A1- 19 955 083
- DE-T5-112007 001 777
- DE-U1- 20 204 852

## Beschreibung

Die Erfindung betrifft ein Ventil nach Anspruch 1 mit einer Druckbegrenzungsfunktion für Common-Rail Schweröl-Einspritzsysteme für Brennkraftmaschinen umfassend einen Ventilträger, einen im Ventilträger verschieblich gelagerten Ventilkolben, der bei geschlossenem Ventil mit einem Ventilsitz zusammenwirkt, und eine den Ventilkolben mit einer im Schließsinn wirkenden Druckkraft beaufschlagende Druckfeder.
Die Erfindung betrifft weiters eine Kraftstoffversorgungsanlage für Common-Rail Schweröl-Einspritzsysteme für Brennkraftmaschinen mit einem Tank, einer Vorförderpumpe zum Fördern von Schweröl vom Tank zu einer Hochdruckpumpe, wobei die Hochdruckpumpe über wenigstens eine Hochdruckleitung mit einem Hochdruckspeicher (Rail) verbunden ist, der wenigstens einen Einspritzinjektor speist, und weiters mit einem Ventil nach einem der Ansprüche 1-12, das über eine eigene Hochdruckleitung an den Hochdruckspeicher angeschlossen ist, um wenigstens eine Teilmenge des Schweröls bei Bedarf über eine Rückführungsleitung in den Tank abzusteuern.
Ein Druckbegrenzungsventil der eingangs genannten Art dient der Druckbegrenzung im Hochdruckspeicher (Rail) bei gleichzeitiger Bereitstellung einer Notfahreigenschaft. Das Druckbegrenzungsventil ist in der Regel am Rail eingeschraubt und steht mit einem federbelasteten Ventilbolzen über einen Dichtsitz mit dem hochverdichteten Kraftstoff in Kontakt. Auf der Rückseite des Dichtsitzes ist das Ventil über eine Leitung mit dem Niederdruckrücklauf des Common Rail Systems verbunden. Bewegt sich der Raildruck innerhalb des zulässigen Bereichs bleibt das Ventil durch die aufgeprägte Federkraft verschlossen und ist gegenüber dem Rücklauf dicht. Tritt im Fehlerfall eine Überschreitung des maximal zulässigen Raildrucks auf, öffnet das Ventil und begrenzt den Systemdruck. Ein Druckbegrenzungsventil ist beispielsweise in der WO 2004/083695 A1 oder in der DE 11 2007 001 777 T5 beschrieben.
Aus Kostengründen werden bei sehr großen Dieselmotoren, insbesondere bei Schiffsdieselmotoren, minderqualitative Kraftstoffe wie beispielsweise Schweröl eingesetzt. Aufgrund der besonderen physikalischen Eigenschaften von Schwerölen müssen für den Betrieb besondere Vorkehrungen getroffen werden. Beispielsweise ist die Viskosität von Schweröl wesentlich höher als von normalem Dieselkraftstoff, sodass eine Erwärmung auf mehr als 80°C erforderlich ist, damit das Schweröl überhaupt gepumpt werden kann.
Die hohe Viskosität von Schweröl bedingt, dass auch während des Motorstillstands immer Kraftstoff im Leitungssystem im Kreis gepumpt werden muss, um das Festwerden von Schweröl in den Leitungen zu verhindern.
Zu diesem Zweck ist in Common-Rail Schweröl-Einspritzsystemen ein Spülventil vorgesehen, welches während des Betriebs des Motors geschlossen ist und dabei die hochdruckseitigen Teile des Treibstoffsystems und damit auch das Rail gegenüber einer niederdruckseitigen Treibstoffrückführleitung, durch welche Treibstoff in den Tank rückgeführt werden kann, verschließt. Bei Stillstand des Motors kann nun dieses Spülventil geöffnet werden, sodass Treibstoff von der Hochdruckseite durch die Hochdruckleitungen und das Rail durch das Ventil zur Niederdruckseite und in der Folge in den Tank im Kreis geführt wird, wobei der Treibstoff durch einen Vorwärmer auf einer entsprechenden Temperatur gehalten wird, sodass ein Festwerden des Schweröls in den Leitungen verhindert wird. Ein derartiges Schweröl-Einspritzsystem mit einem Spülventil ist aus der AT 11 266 U1 bekannt.
Neben der Möglichkeit, eine Kreislaufströmung zur Temperierung des Kraftstoffs im System zu erzeugen, besitzt das Spülventil gleichzeitig auch die Funktion eines Notstoppventils. Durch geeignete Ansteuerung des Spülventils kann im Notfall der Systemdruck sehr schnell abgesenkt werden, ohne dass die Einspritzinjektoren selbst deaktiviert werden müssen.

Bei herkömmlichen Common-Rail Systemen sind das Druckbegrenzungsventil und das Spülventil als voneinander gesonderte Baueinheiten ausgebildet und daher an voneinander verschiedenen Stellen am Rail angeschlossen. Dies bedingt einen hohen baulichen und herstellungstechnischen Aufwand. Die vorliegende Erfindung zielt daher darauf ab, die erwähnten Nachteile zu vermeiden, ohne dass die Lebensdauer oder die Betriebssicherheit der Ventile beeinträchtigt sind.
Zur Lösung dieser Aufgabe ist das Ventil der eingangs genannten Art erfindungsgemäß dahingehend weitergebildet, dass ein den Ventilkolben im Schließsinn beaufschlagender Bolzen mit Hilfe eines Betätigungsmittels entgegen der Druckkraft der Druckfeder zum gesteuerten Öffnen des Ventils zur Ausbildung einer Spülfunktion verschiebbar angeordnet ist. Das Ventil stellt somit eine Kombination des Druckbegrenzungsventils mit dem Spülventil dar, wobei beide Ventile unter Nutzung desselben Ventilsitzes unabhängig voneinander arbeiten. Die Druckfeder des Ventils wirkt bevorzugt gleichzeitig als den Öffnungsdruck der Druckbegrenzungsfunktion des Ventils bestimmende Druckfeder und als Druckfeder für die Spülventilfunktion. Insbesondere beaufschlagt die Druckfeder den Ventilkolben unter Zwischenschaltung des Bolzens im Schließsinn. Dadurch, dass die Druckfeder nicht unmittelbar auf den Ventilkolben des Ventils wirkt, sondern unter Zwischenschaltung des erwähnten Bolzens, wird zusätzlich zur Druckbegrenzungsfunktion die Spülfunktion ermöglicht, wobei das erwähnte Betätigungsmittel dazu dient, eine gegen die Druckfeder wirkende Kraft aufzubringen, welche zu einem Anheben des Bolzens und dementsprechend zu einer Freigabe des Ventilkolbens führt, sodass der Ventilkolben auf Grund des hochdruckseitig anstehenden Drucks vom Ventilsitz abheben und den erforderlichen Durchflussquerschnitt für die Spülfunktion freigeben kann. Solange das Betätigungsmittel nicht aktiviert ist, ist die Druckbegrenzungsfunktion des Ventils hingegen völlig unbeeinträchtigt. So ist es beispielsweise auch in herkömmlicher Weise möglich, den Öffnungsdruck des Druckbegrenzungsventils einzustellen, zu welchem Zweck die Ausbildung bevorzugt derart getroffen ist, dass die Druckfeder an der dem Bolzen abgewandten Seite unter Zwischenschaltung einer Einstellscheibe gehalten ist.

Das Betätigungsmittel für die Betätigung des Bolzens in Öffnungsrichtung, d.h. gegen die Kraft der Druckfeder, kann grundsätzlich beliebig ausgeführt sein, solange die erforderliche Betätigungskraft sichergestellt ist. Die Betätigungskraft, die beispielsweise hydraulisch, magnetisch oder pneumatisch aufgebracht werden kann, könnte grundsätzlich unmittelbar auf den Bolzen zur Wirkung gebracht werden. Um eine ausreichende Betätigungskraft sicherzustellen, ist in der Regel eine entsprechende Angriffsfläche erforderlich, womit eine entsprechende Masse des Bolzens verbunden ist. Gleichzeitig ist man aber bestrebt, die Masse des Bolzens möglichst gering zu halten, um die Trägheit des Ventils für eine optimale Arbeitsweise der Druckbegrenzungsfunktion zu minimieren. Eine bevorzugte Ausbildung, die den beiden genannten gegensätzlichen Anforderungen Rechnung trägt, nämlich das Sicherstellen einer ausreichenden Betätigungskraft und das Minimieren der Trägheit des Systems, sieht dabei vor, dass das Betätigungsmittel einen in einem Zylinder verschieblich gelagerten Betätigungskolben aufweist, der mit einer Anschlagsfläche des Bolzens zum Verschieben des Bolzens entgegen der Druckkraft der Druckfeder in Wirkverbindung bringbar ist. Die Kraft für die Betätigung des Bolzens gegen die Druckfeder gelangt somit nicht unmittelbar am Bolzen zur Wirkung, sondern an einem gesonderten Betätigungskolben, der den Druckbolzen in Öffnungsrichtung mitnimmt. Umgekehrt nimmt aber eine Bewegung des Bolzens nicht den Betätigungskolben mit.

Um zu verhindern, dass der Betätigungskolben den Bolzen in Schließrichtung derart behindert, dass ggf. die Kraft der Druckfeder nicht vollständig auf den Ventilkolben zur Wirkung gelangt, sieht eine weitere bevorzugte Ausbildung vor, dass zwischen der Anschlagsfläche des Bolzens und der entsprechenden Gegenfläche des Kolbens im geschlossenen Zustand des Ventils ein axialer Spalt vorgesehen ist.

In vorteilhafter Weise ist der Betätigungskolben topfförmig ausgebildet und weist an seinem Innenumfang Führungsflächen zum axialen Führen des Bolzens auf.

Die Betätigung des Betätigungskolbens kann wie bereits erwähnt grundsätzlich beliebig erfolgen. Eine besonders betriebssichere und bewährte Betätigung erfolgt bevorzugt dadurch, dass das Betätigungsmittel ein pneumatisches Mittel umfasst, um den Betätigungskolben im Öffnungssinn mit Druck zu beaufschlagen. Dabei kann insbesondere vorgesehen sein, dass eine mit Druckmedium, insbesondere Druckluft, beschickbare Leitung in einen vom Betätigungskolben begrenzten, auf der der Druckfeder abgewandten Seite des Betätigungskolbens angeordneten Raum mündet.

Um eine Rückstellung des Betätigungskolbens nach der für die Öffnung des Spülquerschnitts erforderlichen Verschiebung sicherzustellen, ist bevorzugt vorgesehen, dass eine weitere, den Betätigungskolben in Schließrichtung des Ventils unmittelbar beaufschlagende Druckfeder vorgesehen ist. Eine besonders platzsparende Konstruktion wird dabei bevorzugt dadurch erreicht, dass die den Betätigungskolben beaufschlagende weitere Druckfeder und die den Ventilkolben beaufschlagende Druckfeder koaxial angeordnet sind. Insbesondere können die Druckfedern so angeordnet sein, dass die den Betätigungskolben beaufschlagende weitere Druckfeder die den Ventilkolben beaufschlagende Druckfeder umgibt.

Eine kompakte und modulare Bauweise ergibt sich mit Vorteil dadurch, dass im Ventilträger eine zum Ventilsitz führende Hochdruckbohrung und wenigstens ein Abströmkanal ausgebildet sind. Insbesondere ist der Ventilträger mit dem das Betätigungsmittel aufweisenden Bauteil lösbar verbunden, insbesondere verschraubt.

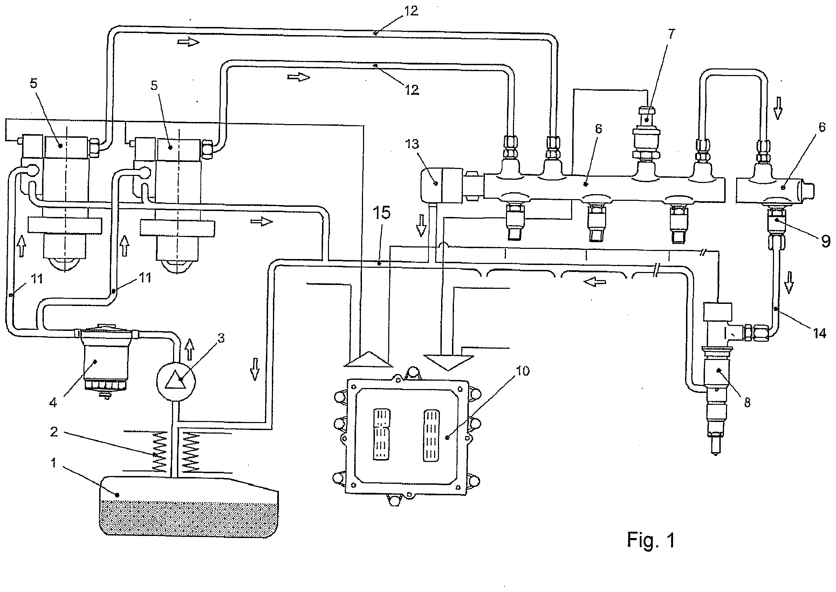

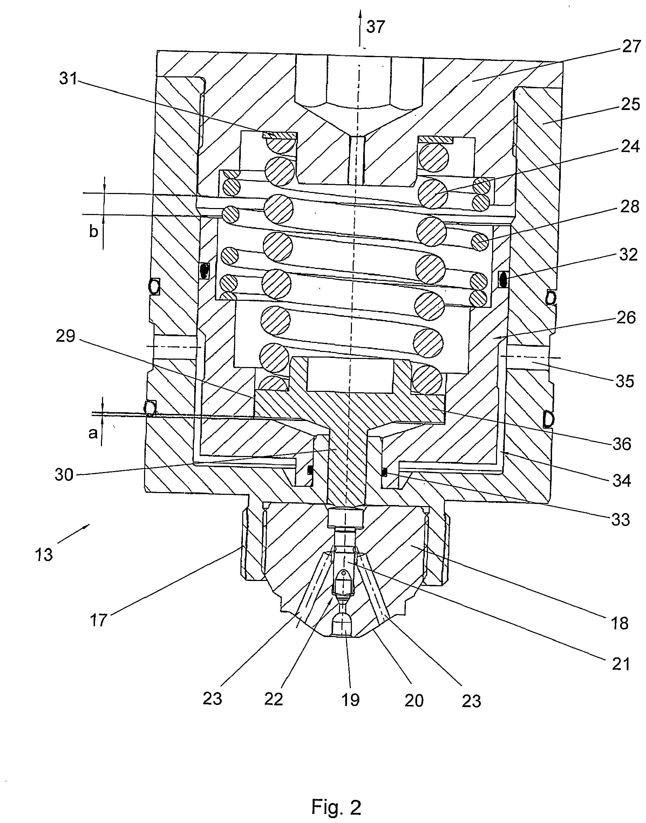

Die Erfindung wird nachfolgend anhand eines in der Zeichnung schematisch dargestellten Ausführungsbeispieles näher erläutert. In dieser zeigt Fig.1 eine Kraftstoffversorgungsanlage und Fig.2 einen Querschnitt durch ein erfindungsgemäßes Ventil.

In Fig. 1 ist ein Common-Rail Schweröl-Einspritzsystem schematisch dargestellt. Vom Tank 1 wird von einer Vorförderpumpe 3 Kraftstoff, der im Vorwärmer 2 erwärmt wurde, über einen Kraftstofffilter 4 und Kraftstoffleitungen 11 zumindest einer Hochdruckpumpe 5 zugeführt, wo der Kraftstoff auf Systemdrücke von höher als 1400 bar verdichtet wird. Der verdichtete Kraftstoff gelangt über Hochdruckleitungen 12 in zumindest ein Rail 6, das unter anderem mit zumindest einem Druckbegrenzungs- und Spülventil 13 und einem Raildrucksensor 7 ausgestattet ist. Der Druck im Rail 6 wird durch Regelung der von der Hochdruckpumpe 5 in die Hochdruckleitung 12 geförderten Kraftstoffmenge durch das Steuergerät 10 eingestellt. Vom Rail 6 ausgehend gelangt der Kraftstoff über einen Durchflussbegrenzer 9 über die Hochdruckleitung 14 in den Einspritzinjektor 8, der ebenfalls vom Steuergerät 10 angesteuert wird. Die zur Funktion des Einspritzinjektors 8 erforderliche Kraftstoffsteuermenge gelangt über die Niederdruckleitungen 15 wieder zurück in den Tank 1. Um auch während des Stillstands des Motors eine Zirkulation des Kraftstoffs im Leitungssystem gewährleisten zu können, führt vom Druckbegrenzungs- und Spülventil 13 eine Niederdruckleitung zum Tank 1, sodass eine Teilmenge des Kraftstoffs direkt über die Niederdruckleitung 15 zurück in den Tank 1 abgesteuert werden kann.

In Fig.2 ist das erfindungsgemäße Druckbegrenzungs- und Spülventil 13 im Detail dargestellt. Das Ventil 13 weist ein Befestigungsgewinde 17 auf, mittels welchem es in das Rail 6 eingeschraubt werden kann, wobei der Ventilträger 18 für den Anschluss der Hochdruckzuleitung 19 an das Rail 6 einen Dichtkegel 20 aufweist. Der Ventilkolben des Ventils 13 ist mit 21 bezeichnet und ist mittels einer Druckfeder 24 gegen den Ventilsitz 22 pressbar. Bei Überschreiten eines vorgegebenen Drucks im Rail 6 wird der Ventilkolben 21 vom Ventilsitz 22 abgehoben und Kraftstoff wird über die Ausströmkanäle 23 abgesteuert. Bezüglich der Ausgestaltung dieser Druckbegrenzungsfunktion wird auch auf das in der WO 2004/083695 A1 beschriebene Druckbegrenzungsventil verwiesen.

Für die Spülfunktion ist nun zusätzlich ein Zylinder 25 vorgesehen, in dem ein topfförmig ausgebildeter Betätigungskolben 26 in axialer Richtung verschieblich geführt ist. Zur Abdichtung ist eine äußere Kolbendichtung 32 und eine innere Kolbendichtung 33 vorgesehen. Der Betätigungskolben 26 ist von einer sich an einem Absatz des Deckels 27 abstützenden Druckfeder 28 beaufschlagt. An zylindrischen Führungsflächen 29 des Betätigungskolbens 26 ist ein Bolzen 30 in axialer Richtung verschieblich geführt, wobei der Bolzen 30 von der sich unter Zwischenschaltung einer Einstellscheibe 31 am Deckel 27 abstützenden Druckfeder 24 beaufschlagt wird.

Die Montage des Ventils 13 erfolgt derart, dass zunächst der Ventilträger 18 als vorgefertigte Einheit mit Ventilkolben 21 und dgl. mit einem entsprechenden Drehmoment in den Zylinder 25 eingeschraubt wird. Danach wird der Betätigungskolben 26 mit vormontierten Dichtungen 32 und 33 in den Zylinder 25 eingesetzt. Dann werden die Druckfedern 24 und 28 eingesetzt. Nach dem Einstellen des Öffnungsdrucks des Druckbegrenzungsventils mittels der Einstellscheibe 31 wird schließlich der Deckel 27 eingeschraubt.

Für die Spülfunktion wird die Kammer 34 über die Öffnung 35 mit Druckluft beaufschlagt, wodurch der Betätigungskolben 26 in Öffnungsrichtung beaufschlagt wird. Nach Überwindung des durch den axialen Spalt a definierten Leerhubs hebt der Betätigungskolben 26 den Bolzen 30 bis zum Erreichen des Hubanschlags unter Überwindung des Kolbenhubes b nach oben. Der Betätigungskolben 26 wirkt zu diesem Zweck mit einer an der Unterseite des mit vergrößertem Durchmesser ausgebildeten Tellers 36 ausgebildeten Anschlagfläche zusammen. Der Ventilkolben 21 wird dabei vollständig aus dem Ventilsitz 22 gehoben, sodass für den Spülvorgang der entsprechende Querschnitt zur Verfügung gestellt wird. Wird der Betätigungskolben 26 nicht mehr mit Luft beaufschlagt, drücken zuerst die beiden Druckfedern 24 und 28 den Bolzen 30 und den Ventilkolben 21 in die Ausgangsposition und dann die Druckfeder 28 den Betätigungskolben in die Ausgangsposition.

Für die Druckbegrenzungsfunktion kommt nur die Druckfeder 24 zur Wirkung, wobei der Unterschied zu einem herkömmlichen Druckbegrenzungsventil lediglich darin liegt, dass die Druckfeder 24 den Ventilkolben 21 unter Zwischenschaltung des Bolzens 30 beaufschlagt.

Der Innenraum de Zylinders 25 ist mit Schweröl gefüllt. Eine Leckageöffnung für den Austritt des Schweröls ist mit 37 bezeichnet.

Die vorliegende Erfindung erlaubt es somit, das Druckbegrenzungsventil mit dem Spülventil zu kombinieren. Als Vorteil sind die kompakte Bauweise, die geringen Kosten und die Notwendigkeit nur eines einzigen Hochdruckanschlusses zu nennen.

## Patentansprüche

1. Ventil mit einer Druckbegrenzungsfunktion für Common-Rail Schweröl-Einspritzsysteme für Brennkraftmaschinen umfassend einen Ventilträger (18), einen im Ventilträger (18) verschieblich gelagerten Ventilkolben (21), der bei geschlossenem Ventil mit einem Ventilsitz (22) zusammenwirkt, und eine den Ventilkolben (21) mit einer im Schließsinn wirkenden Druckkraft beaufschlagende Druckfeder (24), wobei ein den Ventilkolben (21) im Schließsinn beaufschlagender Bolzen (30) mit Hilfe eines Betätigungsmittels entgegen der Druckkraft der Druckfeder (24) zum gesteuerten Öffnen des Ventils zur Ausbildung einer Spülfunktion verschiebbar angeordnet ist, **dadurch gekennzeichnet, dass** das Betätigungsmittel einen in einem Zylinder (25) verschieblich gelagerten Betätigungskolben (26) aufweist, der mit einer Anschlagsfläche des Bolzens (30) zum Verschieben des Bolzens (30) entgegen der Druckkraft der Druckfeder (24) in Wirkverbindung bringbar ist.

2. Ventil nach Anspruch 1, **dadurch gekennzeichnet, dass** die Druckfeder (24) den Ventilkolben (21) unter Zwischenschaltung des Bolzens (30) im Schließsinn beaufschlagt.

3. Ventil nach Anspruch 1 oder 2, **dadurch gekennzeichnet, dass** die Druckfeder (24) an der dem Bolzen (30) abgewandten Seite unter Zwischenschaltung einer Einstellscheibe (31) gehalten ist.

4. Ventil nach einem der Ansprüche 1 bis 3, **dadurch gekennzeichnet, dass** zwischen der Anschlagsfläche des Bolzens (30) und der entsprechenden Gegenfläche des Betätigungskolbens (26) im geschlossenen Zustand des Ventils ein axialer Spalt (a) vorgesehen ist.

5. Ventil nach einem der Ansprüche 1 bis 4, **dadurch gekennzeichnet, dass** der Betätigungskolben (26) topfförmig ausgebildet ist und an seinem Innenumfang Führungsflächen (29) zum axialen Führen des Bolzens (30) aufweist.

6. Ventil nach einem der Ansprüche 1 bis 5, **dadurch gekennzeichnet, dass** das Betätigungsmittel ein pneumatisches Mittel umfasst, um den Betätigungskolben (26) im Öffnungssinn mit Druck zu beaufschlagen.

7. Ventil nach einem der Ansprüche 1 bis 6, **dadurch gekennzeichnet, dass** eine mit Druckmedium, insbesondere Druckluft, beschickbare Leitung in einen vom Betätigungskolben (26) begrenzten, auf der der Druckfeder (24) abgewandten Seite des Betätigungskolbens (26) angeordneten Raum (34) mündet.

8. Ventil nach einem der Ansprüche 1 bis 7, **dadurch gekennzeichnet, dass** eine weitere, den Betätigungskolben (26) in Schließrichtung des Ventils unmittelbar beaufschlagende Druckfeder (28) vorgesehen ist.

9. Ventil nach Anspruch 8, **dadurch gekennzeichnet, dass** die den Betätigungskolben (26) beaufschlagende weitere Druckfeder (28) und die den Ventilkolben (21) beaufschlagende Druckfeder (24) koaxial angeordnet sind.

10. Ventil nach Anspruch 8 oder 9, **dadurch gekennzeichnet, dass** die den Betätigungskolben (26) beaufschlagende weitere Druckfeder (28) die den Ventilkolben (21) beaufschlagende Druckfeder (24) umgibt.

11. Ventil nach einem der Ansprüche 1 bis 10, **dadurch gekennzeichnet, dass** im Ventilträger (18) eine zum Ventilsitz (22) führende Hochdruckbohrung (19) und wenigstens ein Abströmkanal (23) ausgebildet sind.

12. Ventil nach einem der Ansprüche 1 bis 11, **dadurch gekennzeichnet, dass** der Ventilträger (18) mit dem das Betätigungsmittel aufweisenden Bauteil lösbar verbunden, insbesondere verschraubt ist.

13. Kraftstoffversorgungsanlage für Common-Rail Schweröl-Einspritzsysteme für Brennkraftmaschinen mit einem Tank (1), einer Vorförderpumpe (3) zum Fördern von Schweröl vom Tank (1) zu einer Hochdruckpumpe (5), wobei die Hochdruckpumpe (5) über wenigstens eine Hochdruckleitung (12) mit einem Hochdruckspeicher (Rail) (6) verbunden ist, der wenigstens einen Einspritzinjektor (8) speist, und weiters mit einem Ventil (13), das gesondert, bevorzugt über eine eigene Hochdruckleitung, an den Hochdruckspeicher (6) angeschlossen ist, um wenigstens eine Teilmenge des Schweröls bei Bedarf über eine Rückführungsleitung (15) in den Tank (1) abzusteuern, **dadurch gekennzeichnet, dass** das Ventil (13) als ein eine Druckbegrenzungsfunktion und eine Spülfunktion aufweisendes Ventil (13) nach einem der Ansprüche 1 bis 12 ausgebildet ist, wobei beide Ventilfunktionen unter Nutzung desselben Ventilsitzes (22) unabhängig voneinander arbeiten.

## Claims

1. Valve having a pressure limiting function for common rail heavy fuel injection systems for internal combustion engines comprising a valve support (18), a valve piston (21) which is mounted displaceably in the valve support (18) and interacts with a valve seat (22) in the case of a closed valve, and a compression spring (24) which loads the valve piston (21) with a pressure force which acts in the closing direction, a pin (30) which loads the valve piston (21) in the closing direction being arranged such that it can be displaced with the aid of an actuating means counter to the pressure force of the compression spring (24) for the controlled opening of the valve in order to configure a flushing function, **characterized in that** the actuating means has an actuating piston (26) which is mounted displaceably in a cylinder (25) and can be brought into an operative connection with a stop face of the pin (30) in order to displace the pin (30) counter to the pressure force of the compression spring (24).

2. Valve according to Claim 1, **characterized in that** the compression spring (24) loads the valve piston (21) in the closing direction, with the pin (30) being connected in between.

3. Valve according to Claim 1 or 2, **characterized in that** the compression spring (24) is held on the side which faces away from the pin (30), with an adjustment disc (31) connected in between.

4. Valve according to one of Claims 1 to 3, **characterized in that** an axial gap (a) is provided in the closed state of the valve between the stop face of the pin (30) and the corresponding counter-face of the actuating piston (26).

5. Valve according to one of Claims 1 to 4, **characterized in that** the actuating piston (26) is of cup-shaped configuration and has guide faces (29) on its inner circumference for the axial guidance of the pin (30).

6. Valve according to one of Claims 1 to 5, **characterized in that** the actuating means comprises a pneumatic means, in order to load the actuating piston (26) with pressure in the opening direction.

7. Valve according to one of Claims 1 to 6, **characterized in that** a line which can be loaded with pressure medium, in particular compressed air, opens into a space (34) which is delimited by the actuating piston (26) and is arranged on that side of the actuating piston (26) which faces away from the compression spring (24).

8. Valve according to one of Claims 1 to 7, **characterized in that** a further compression spring (28) is provided which directly loads the actuating piston (26) in the closing direction of the valve.

9. Valve according to Claim 8, **characterized in that** the further compression spring (28) which loads the actuating piston (26) and the compression spring (24) which loads the valve piston (21) are arranged coaxially.

10. Valve according to Claim 8 or 9, **characterized in that** the further compression spring (28) which loads the actuating piston (26) surrounds the compression spring (24) which loads the valve piston (21).

11. Valve according to one of Claims 1 to 10, **characterized in that** a high pressure bore (19) which leads to the valve seat (22) and at least one outflow duct (23) are configured in the valve support (18).

12. Valve according to one of Claims 1 to 11, **characterized in that** the valve support (18) is connected releasably, in particular screwed, to the component which has the actuating means.

13. Fuel supply system for common rail heavy fuel injection systems for internal combustion engines having a tank (1), a prefeed pump (3) for delivering heavy fuel from the tank (1) to a high pressure pump (5), the high pressure pump (5) being connected via at least one high pressure line (12) to a high pressure accumulator (rail) (6) which feeds at least one injection injector (8), and, furthermore, having a valve (13) which is connected to the high pressure accumulator (6) separately, preferably via a dedicated high pressure line, in order to discharge at least a part quantity of the heavy fuel via a return line (15) into the tank (1) if required, **characterized in that** the valve (13) is configured as a valve (13) according to one of Claims 1 to 12 which has a pressure limiting function and a flushing function, the two valve functions operating independently of one another with the utilization of the same valve seat (22).

## Revendications

1. Soupape présentant une fonction de limitation de pression pour des systèmes d'injection d'huile lourde à rail commun de moteurs à combustion interne, comprenant un support (18) de soupape, un piston (21) de soupape monté à coulissement dans le support (18) de soupape et qui coopère avec un siège (22) de soupape lorsque la soupape est fermée et un ressort de compression (24) qui applique sur le piston (21) de soupape une force de poussée qui agit dans le sens de la fermeture, un goujon (30) qui agit sur le piston (21) de soupape dans le sens de la fermeture étant disposé à coulissement à l'aide d'un moyen d'actionnement en opposition à la force de poussée du ressort de compression (24) en vue d'ouvrir de manière commandée la soupape et d'exercer une fonction de rinçage,
**caractérisée en ce que**
le moyen d'actionnement présente un piston d'actionnement (26) monté à coulissement dans un cylindre (25) et qui peut être amené à coopérer avec une surface de butée du goujon (30) pour déplacer le goujon (30) en opposition à la force de poussée du ressort de compression (24).

2. Soupape selon la revendication 1, **caractérisée en ce que** le ressort de compression (24) sollicite le piston (21) de soupape dans le sens de la fermeture par l'intermédiaire du goujon (30).

3. Soupape selon les revendications 1 ou 2,
**caractérisée en ce que** le ressort de compression (24) est maintenu sur le côté non tourné vers le goujon (30) par l'intermédiaire d'un disque de réglage (31).

4. Soupape selon l'une des revendications 1 à 3,
**caractérisée en ce qu'**un interstice axial (a) est prévu entre la surface de butée du goujon (30) et la surface complémentaire correspondante du piston d'actionnement (26) lorsque la soupape est en position fermée.

5. Soupape selon l'une des revendications 1 à 4,
**caractérisée en ce que** le piston d'actionnement (26) a la forme d'un godet et présente sur sa périphérie intérieure des surfaces de guidage (29) qui guident axialement le goujon (30).

6. Soupape selon l'une des revendications 1 à 5,
**caractérisée en ce que** le moyen d'actionnement comporte un moyen pneumatique qui applique sur le piston d'actionnement (26) une poussée en direction de l'ouverture.

7. Soupape selon l'une des revendications 1 à 6,
**caractérisée en ce qu'**un conduit qui peut être alimenté en fluide sous pression, en particulier en air comprimé, débouche dans un espace (34) délimité par le piston d'actionnement (26) et disposé sur le côté du piston d'actionnement (26) non tourné vers le ressort de compression (24).

8. Soupape selon l'une des revendications 1 à 7,
**caractérisée en ce qu'**un autre ressort de compression (28) qui sollicite directement le piston d'actionnement (26) dans la direction de la fermeture de la soupape est prévu.

9. Soupape selon la revendication 8, **caractérisée en ce que** l'autre ressort de compression (28) qui sollicite le piston d'actionnement (26) et le ressort de compression (24) qui sollicite le piston (21) de soupape sont disposés coaxialement.

10. Soupape selon les revendications 8 ou 9,
**caractérisée en ce que** l'autre ressort de compression (28) qui sollicite le piston d'actionnement (26) entoure le ressort de compression (24) qui sollicite le piston (21) de soupape.

11. Soupape selon l'une des revendications 1 à 10,
**caractérisée en ce qu'**un alésage de haute pression (19) qui conduit au siège (22) de soupape et au moins un canal d'évacuation (23) sont formés dans le support (18) de soupape.

12. Soupape selon l'une des revendications 1 à 11,
**caractérisée en ce que** le support (18) de soupape est relié de manière libérable et en particulier vissé sur le composant qui présente le moyen d'actionnement.

13. Installation d'alimentation en carburant pour des systèmes d'injection d'huile lourde à rail commun pour moteurs à combustion interne, présentant un réservoir (1), une pompe (3) de pré-refoulement qui transporte l'huile lourde du réservoir (1) à une pompe (5) à haute pression, la pompe (5) à haute pression étant reliée par au moins un conduit (12) à haute pression à un réservoir (rail) (6) à haute pression qui alimente au moins un injecteur d'injection (8), et doté en outre d'une soupape (13) qui est raccordée séparément au réservoir (6) à haute pression, de préférence par son propre conduit à haute pression, pour, en cas de besoin, évacuer au moins une partie de l'huile lourde dans le réservoir (1) par un conduit de renvoi (15),
**caractérisée en ce que**
la soupape (13) est configurée comme soupape (13) selon l'une des revendications 1 à 12 qui présente une fonction de limitation de pression et une fonction de rinçage,
les deux fonctions de la soupape s'exerçant indépendamment l'une de l'autre en utilisant le même siège (22) de soupape.
